# EUROPÄISCHE PATENTANMELDUNG

(11) **EP 3 243 864 A1**
(43) Veröffentlichungstag der Anmeldung: **15.11.2017**
(21) Anmeldenummer: 16168683.7
(22) Anmeldetag: 09.05.2016
(51) Int. Cl.: C08J 9/00, C08G 18/12, C08G 18/42, C09J 153/00, C09J 175/06, C09D 153/00, C09D 175/06

(54) **VERWENDUNG VON BLOCK-COPOLYMEREN IN BESCHICHTUNGEN**

(71) Anmelder: Evonik Degussa GmbH, 45128 Essen (DE)
(72) Erfinder: Kolb, Nicolai, 45657 Recklinghausen (DE); Glöckner, Patrick, 45721 Haltern am See (DE)

(57) **Zusammenfassung**

Die vorliegende Erfindung betrifft die Verwendung von Block-Copolymeren auf Basis von OH-, COOH- oder Amino-funktionalisierten Polyolefinen und Polyestern als Bindemittel in Beschichtungszusammensetzungen, vorzugsweise Lacken, insbesondere zur Verbesserung der Haftung von Beschichtungen, insbesondere Coil-Coating-Beschichtungen auf Metallen und Beschichtungszusammensetzungen enthaltend die genannten Block-Copolymere.

## Beschreibung

Die vorliegende Erfindung betrifft die Verwendung von Block-Copolymeren auf Basis von OH-, COOH- oder Amino-funktionalisierten Polyolefinen und Polyestern als Bindemittel in
Beschichtungszusammensetzungen, vorzugsweise Lacken. Insbesondere Betrifft die Erfindung die Verwendung der genannten Block-Copolymere zur Verbesserung der Haftung von Beschichtungen, insbesondere Coil-Coating-Beschichtungen, auf Metallen und Beschichtungszusammensetzungen enthaltend die genannten Block-Copolymere.

Polyester- und Polyether-Polyole werden heute vielfach als Rohstoffe genutzt, unter anderem zur Herstellung von Lackharzen, welche beispielsweise für die Vorbeschichtung von Metallen genutzt werden. Hierzu werden die Polyole in der Regel in Lösungsmitteln gelöst und nach dem Auftrag auf dem Metall in der Hitze mit Melamin vernetzt, wobei der vernetzte Polyester auf dem Metall haftet und das Lösungsmittel verdampft.

Für die Haftung ist die Beschaffenheit des Untergrunds, also in der Regel die Beschaffenheit des Metalls, wesentlich. Vielfach sind die Metalle aufgrund von Verarbeitungsschritten verschmutzt, beispielsweise durch Ölrückstände. Derartige Rückstände führen zu einer deutlich verringerten Haftung und Benetzung des Lacksystems auf dem Metall. Aus diesem Grund ist in den derzeit
üblichen Verfahren eine intensive Reinigung der Metalle vor der eigentlichen Beschichtung mit dem Lacksystem erforderlich. Diese zusätzliche Reinigung ist in der Regel sehr aufwendig und arbeitsintensiv.

Es bestand also die Aufgabe, Systeme zur Verfügung zu stellen, die die genannten Nachteile des Standes der Technik umgehen.

Die genannte Aufgabe wird durch den Einsatz von Block-Copolymeren gemäß der vorliegenden Erfindung gelöst. Ein erster Gegenstand der vorliegenden Erfindung ist demgemäß die Verwendung von Block-Copolymeren aus OH-, COOH- oder Amino-funktionalisierten Polymeren und Polyestern als Bindemittel in Beschichtungszusammensetzungen, vorzugsweise Lacken, insbesondere zur Verbesserung der Haftung von Beschichtungen, insbesondere Coil-Coating-Beschichtungen auf Metallen.

Ein erster Gegenstand der vorliegenden Erfindung betrifft demgemäß die Verwendung von Block-Copolymeren auf Basis von OH-, COOH- oder Amino-funktionalisierten Polyolefinen und Polyestern als Bindemittel in Beschichtungszusammensetzungen.

Es hat sich überraschend gezeigt, dass die Nachteile des Standes der Technik, nämlich die geringe Haftung und schlechte Benetzung von Polyester- und Polyether-basierten Lacken auf verschmutzten, insbesondere öligen Oberflächen, durch die Einmischung der erfindungsgemäß eingesetzten Block-Copolymere verbessert werden kann. Hierbei bietet die erfindungsgemäße Verwendung von Block-Copolymeren aus OH-, COOH- oder Amino-funktionalisierten Polymeren und Polyestern den Vorteil, dass die unpolaren Bausteine, beispielsweise Polybutadien, durch die Block-Struktur verträglich gemacht werden und mittels des Polyester beliebig und vielseitig modifizierbar sind, beispielsweise hinsichtlich Molekulargewicht, thermischen Eigenschaften sowie der Löslichkeit zu anderen Polyestern. Die Wirkung von Block-Copolymeren aus OH-, COOH- oder Amino-funktionalisierten Polymeren und Polyestern als Haftungsvermittler zur Verbesserung der Haftungseigenschaften, insbesondere auf metallischen Untergründen, ist für den Fachmann aus dem Stand der Technik nicht bekannt, insbesondere dahingehend dass auch bereits der Zusatz der Block-Copolymere für die Entfaltung deren Wirkung ausreichend ist.

In der Regel handelt es sich bei den erfindungsgemäß eingesetzten Block-Copolymeren auf Basis von OH-, COOH- oder Amino-funktionalisierten, bevorzugt terminierten, Polymeren und Polyestern um B(A)ₓ-Blocksysteme, mit A = Polyester, mit B = OH-, COOH- oder Amino-funktionalisiertes, bevorzugt terminiertes, Polymer, bevorzugt ein Polyolefin, und mit x ≥ 1. Der Wert für x spiegelt die Funktionalität des OH-, COOH- oder Amino-funktionalisierten, bevorzugt terminierten, Polymeren wieder. In der Regel liegt die Funktionalität der OH-, COOH- oder Amino-funktionalisierten, bevorzugt terminierten, Polymeren, und damit x im Bereich von 1 bis 5, vorzugsweise im Bereich von 1,5 bis 3,5, insbesondere bevorzugt im Bereich von 2 bis 3. Im Falle von x = 2, also bei OH-, COOH- oder Amino-funktionalisierten, bevorzugt terminierten, Polymeren mit einer Funktionalität von 2, handelt es sich bei den Block-Copolymeren insbesondere um ABA-Triblocksysteme. Weiterhin sind ebenfalls Block-Strukturen der Formel (AB)ₙ möglich, wobei n ≥ 1 ist.

Grundsätzlich können alle dem Fachmann bekannten OH-, COOH- oder Amino-funktionalisierten Polymere im Rahmen der vorliegenden Erfindung als Basis für die Block-Copolymere eingesetzt werden. Bevorzugt ist im Rahmen der vorliegenden Erfindung ist das Vorliegen von terminalen OH- oder Amino-Gruppen zur Bildung der Copolymere. Darüber hinaus können in den bevorzugten OH- oder Amino-terminierten Polymeren weitere OH-, COOH- oder Amino-Gruppen entlang der Kette vorliegen.

Beispiele geeigneter OH-, COOH- oder Amino-funktionalisierter Polymere sind OH-funktionalisierte Polyether wie Polyethylenglykol, Polypropylenglykol oder Polystyroloxid, OH-funktionalisierte Polycarbonate wie Polyethylencarbonat, Polypropylencarbonat oder aromatisches Polycarbonat, OHfunktionalisierte Polyethercarbonate, OH-funktionalisierte Polyester, NH₂- oder NHR- oder NR₂-funktionalisierte Polyamide, NH₂- oder NHR- oder NR₂-funktionalisierte Polyamine, OH-Gruppen tragende Poly(meth)-acrylate, OH-funktionalisiertes Polystyrol, OH-funktionalisierte Polyolefine wie OH-funktionalisiertes Polybutadien, OH-funktionalisiertes Polyisopren, OH-funktionalisiertes Polyethylen, OH-funktionalisiertes Polypropylen sowie COOH-funktionalisierte Polyester. Bevorzugte OH-funktionalisierte Polymere sind OH-terminierte Polymere, insbesondere OH-terminiertes
Polystyrol sowie OH-terminierte Polyolefine, insbesondere OH-terminiertes Polybutadien. Ganz besonders bevorzugt handelt es sich bei dem OH- oder Amino-terminierten Polymeren um OH-terminiertes Polybutadien.

Im Rahmen der vorliegenden Erfindung werden, wie vorab ausgeführt, als OH-, COOH-oderAminofunktionalisierte Polymere, insbesondere bevorzugt OH-terminierte Polybutadiene, für die Herstellung der erfindungsgemäß eingesetzten Block-Copolymere eingesetzt. Diese können nicht hydriert oder auch in teilweiser oder vollständig hydrierter Form eingesetzt werden.

In einer besonders bevorzugten Ausführungsform der vorliegenden Erfindung umfasst das hydroxyterminierte Polybutadien die aus 1,3-Butadien abgeleiteten Monomereinheiten 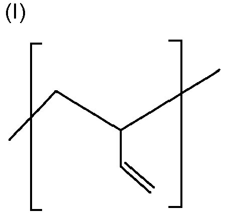 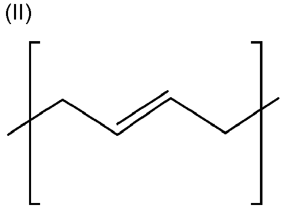 und 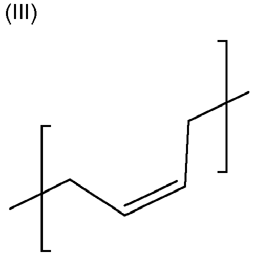 wobei der Anteil von (I) an der im Polybutadien enthaltenen aus 1,3-Butadien abgeleiteten Gesamtheit der Monomereinheiten 10 bis 60 Molprozent beträgt, und wobei die Summe der Anteile von (II) und (III) an der Gesamtheit der im Polybutadien enthaltenen aus 1,3-Butadien abgeleiteten Monomereinheiten 40 bis 90 Molprozent beträgt.

Bei dem vorab genannten hydroxyterminierten Polybutadien handelt es sich bevorzugt um ein durch radikalische Polymerisation von 1,3-Butadien erzeugtes Polybutadien mit Hydroxygruppen, jeweils umfassend die im Polybutadien enthaltenen aus 1,3-Butadien abgeleiteten Monomereinheiten (I), (II) und (III), wobei eine eckige Klammer bei der in dieser Anmeldung gewählten formelmäßigen Darstellung der im Polybutadien enthaltenen aus 1,3-Butadien abgeleiteten Monomereinheiten (I), (II) und (III) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist. Die Monomereinheiten (I), (II) und (III) können dabei in beliebiger Reihenfolge im Polymer angeordnet sein. Bevorzugt ist eine statistische Anordnung.

In einer bevorzugten Ausführungsform beträgt der Anteil von (I), (II) und (III) an der Gesamtheit der im Polybutadien enthaltenen aus 1,3-Butadien abgeleiteten Monomereinheiten jeweils und unabhängig voneinander wenigstens 10 Mol-%.
Insbesondere bevorzugt beträgt der Anteil von (I) an der Gesamtheit der im Polybutadien enthaltenen aus 1,3-Butadien abgeleiteten Monomereinheiten 15 bis 30 Mol-%, der Anteil von (II) an der Gesamtheit der im Polybutadien enthaltenen aus 1,3-Butadien abgeleiteten Monomereinheiten 50 bis 70 Mol-% und der Anteil von (III) an der Gesamtheit der im Polybutadien enthaltenen aus 1,3-Butadien abgeleiteten Monomereinheiten 15 bis 30 Mol-%. Das mittlere Molekulargewicht, bestimmt durch Gelpermeationschromatographie, der hydroxyterminierten Polybutadiene liegt typischerweise zwischen 500 und 10.000 g/mol, bevorzugt zwischen 1000 und 5.000 g/mol, besonders bevorzugt zwischen 1500 und 4000 g/mol.

In einer bevorzugten Ausführungsform können neben den im Polybutadien enthaltenen aus 1,3-Butadien abgeleiteten Monomereinheiten (I), (II) und (III) auch noch andere Monomereinheiten enthalten sein, insbesondere solche, die nicht aus 1,3-Butadien abgeleitet sind. In einer bevorzugten Ausführungsform stellt die Gesamtheit der im Polybutadien enthaltenen aus 1,3-Butadien abgeleiteten Monomereinheiten (I), (II) und (III)jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Molprozent dar.

Die erfindungsgemäß eingesetzten hydroxyterminierten Polybutadiene werden mittels radikalischer Polymerisation, beispielsweise durch Polymerisation von 1,3-Butadien in Anwesenheit von Wasserstoffperoxid, Wasser und einem organischen Lösungsmittel hergestellt. Geeignete Verfahren sind beispielsweise in EP 2 492 292 beschrieben.

Die im Rahmen der vorliegenden Erfindung vorzugsweise einsetzbaren Polybutadiene sind kommerziell erhältlich, beispielsweise als POLYVEST^{®} HT von der Evonik Resource Efficiency GmbH.

Die Funktionalität der eingesetzten OH-terminierten Polybutadiene liegt in der Regel im Bereich von 1 bis 5, vorzugsweise im Bereich von 1,5 bis 3,5, und insbesondere bevorzugt im Bereich von 2 bis 3. Wesentlich im Rahmen der vorliegenden Erfindung ist das Vorliegen von OH-Gruppen zur Bildung der Copolymere. Diese OH-Gruppen sind üblicherweise am Kettenende des Polybutadiens vorhanden, darüber hinaus können in den OH-terminierten Polybutadienen weitere OH-Gruppen entlang der Kette vorliegen. Daher liegt die Funktionalität (berechnet aus der OH-Zahl und dem zahlenmittleren Molekulargewicht) der eingesetzten OH-terminierten Polybutadiene in der Regel im Bereich von 1 bis 5, vorzugsweise im Bereich von 1,5 bis 3,5. Im Rahmen der vorliegenden Erfindung wird die Funktionalität bestimmt durch die Korrelation von Molekulargewicht zu OHZ.

Es ist möglich, die Funktionalität beispielsweise durch die Reaktion von Monoisocyanaten mit den OH-Gruppen einzustellen.

Neben den vorab beschriebenen OH-, COOH- oder Amino-funktionalisierten Polymeren (Block B) enthalten die erfindungsgemäß eingesetzten Block-Copolymere Blöcke aus Polyestern (Block A), insbesondere basieren die Block-Copolymere auf Polyestern aus Lactonen und/oder Lactid sowie Mischungen hieraus.

Beispiele geeigneter Lactone sind insbesondere C₃-Lactone wie β-Propiolacton, C₄-Lactone wie β-Butyrolacton oder γ-Butyrolacton, C₅-Lactone wie 4-Hydroxy-3-pentensäure-gamma-lacton, α-Methylene-γ-butyrolacton, γ-Methylene-γ-butyrolacton, 3-Methyl-2(5H)-furanon, γ-Valerolacton, δ-Valerolacton, C₆-Lactone wie δ-Hexalacton, ε-Caprolacton oder γ-Hexalacton, oder weitere Lactone wie 5-Butyl-4-methyldihydro-2(3H)-furanon, δ-Octanolactone, γ-Phenyl-ε-caprolacton, Oxacyclododecan-2-on, Oxacyclotridecan-2-on, Pentadecanolid, 16-Hexadecanolid, γ-Undecalacton, δ-Undecalacton, γ-Methylene-γ-butyrolacton oder Mischungen daraus.

Unter Lactiden werden im Rahmen der vorliegenden Erfindung zyklische Ester der Milchsäure verstanden, die in drei Isomeren vorkommen können: (S,S)-3,6-Dimethyl-1,4-dioxan-2,5-dion (CAS-Nr. 4511-42-6), (*R*,*R*)-3,6-Dimethyl-1,4-dioxan-2,5-dion (CAS-Nr. 25038-75-9) sowie (meso)- 3,6-Dimethyl-1,4-dioxan-2,5-dion (CAS-Nr. 13076-19-2). Keine isomere Form ist hierbei besonders bevorzugt.

Bevorzugt werden zur Herstellung der Block-Copolymere Mischungen von mindestens zwei Lactonen und/oder Lactiden verwendet, vorzugsweise Mischungen aus einem Lacton und einem Lactid, wobei Mischungen aus epsilon-Caprolacton und Lactid insbesondere bevorzugt sind. Hierdurch können die Eigenschaften der Block-Copolymere gezielt variiert werden, insbesondere bezüglich der Mischbarkeit mit anderen Polyester-Polyolen oder hinsichtlich der thermischen Eigenschaften.

Die erfindungsgemäß eingesetzten Block-Copolymere aus OH-, COOH- oder Aminofunktionalisierten Polymeren und Polyestern werden insbesondere durch OH- oder Amino-initiierte Ringöffnungspolymerisation erhalten. Dabei dienen die OH-, COOH- oder Amino-funktionalisierten Polymere als Initiator bei der Ringöffnung der Lactone und/oder Lactide, die zum Aufbau der Polyesterketten an das OH-, COOH- oder Amino-funktionalisierte Polymer führt.

Übliche homogene Katalysatoren für die Ringöffnungspolymerisation sind beispielsweise Zinn(II)-ethylhexanoat, Dibutylzinndilaurat, organische Amidinbasen wie 1,8-Diazabicyclo[5.4.0]undec-7-en, 1,5-Diazabicyclo[4.3.0]non-5-ene, 1,4-Diazabicyclo[2.2.2]octane sowie 1,5,7-Triazabicyclo[4.4.0]dec-5-ene oder Titan(IV)-Alkoholate wie Tetramethyltitanat, Tetrabutyltitanat, Tetraisopropyltitanat, Tetraphenyltitanat, Dibutyltriethanolamintitanat, Tetrahexyltitanat oder Triethanolaminatoisopropyltitanat.

Die Ringöffnungsreaktion wird normalerweise bei Temperaturen von 20 - 250 °C durchgeführt, insbesondere in einem Zeitraum von 1 - 20 Stunden, wahlweise in der Schmelze oder in Anwesenheit von Lösungsmitteln.

Die molaren Verhältnisse von Lacton zu OH- oder Amino-Gruppen des OH- oder Amino-terminierten Polymeren betragen üblicherweise 1:1 bis 200:1.

Die Konzentration an Hydroxylendgruppen der erfindungsgemäß eingesetzten Block-Copolymere, titrimetrisch nach DIN 53240-2 bestimmt, liegt zwischen 0 und 300 mg KOH /g, bevorzugt zwischen 5 und 50 mg KOH /g.

Die Konzentration an Säureendgruppen der erfindungsgemäß eingesetzten Block-Copolymere, bestimmt nach DIN EN ISO 2114, liegt zwischen 0 und 50 mg KOH/g, bevorzugt jedoch unter 2 mg KOH/g.

Das zahlenmittlere Molekulargewicht der erfindungsgemäß eingesetzten Block-Copolymere beträgt 600 - 60 000 g/mol, vorzugsweise 1000 - 30 000 g/mol. Es wird nach DIN 55672-1 mittels Gelpermeationschromatographie in Tetrahydrofuran als Eluent und Polystyrol zur Kalibrierung bestimmt.

Die Funktionalität der erfindungsgemäß eingesetzten Block-Copolymere liegt in der Regel im
Bereich von 1 bis 5, vorzugsweise im Bereich von 1,5 bis 3,5. Im Rahmen der vorliegenden
Erfindung wird die Funktionalität bestimmt durch die Korrelation von Molekulargewicht zu OHZ.
Ein weiterer Gegenstand der vorliegenden Erfindung sind Beschichtungszusammensetzungen mindestens enthaltend (a) Block-Copolymere aus OH-, COOH- oder Amino-funktionalisierten Polymeren (Block B) und Polyestern (Block A), und (b) mindestens einer weiteren OH-, COOH- oder Amino-funktionalisierten Komponente, insbesondere OH- und/oder COOH-funktionalisierte Polyester, OH-funktionalisierte Polyether, OH-funktionalisiertes Polybutadien (z. B. POLYVEST^{®} HT), OH- und/oder COOH-funktionalisierte Poly(meth)acrylate oder Aminogruppen-funktionalisierte Polymere.

In einer bevorzugten Ausführungsform enthalten die Beschichtungszusammensetzungen als Komponente (b) Polyester auf Basis von Di-oder Polyolen und Di- oder Polycarbonsäuren bzw. deren Derivaten.

Im Hinblick auf die Polyole und Polycarbonsäuren gibt es grundsätzlich keine Einschränkungen und es können grundsätzlich alle Mischungsverhältnisse auftreten. Die Auswahl richtet sich nach den gewünschten physikalischen Eigenschaften des Polyesters. Diese können bei Raumtemperatur fest und amorph, flüssig und amorph oder/und (teil-)kristallin sein.

Unter Polycarbonsäuren sind Verbindungen zu verstehen, die mehr als eine und bevorzugt zwei oder mehr Carboxylgruppen tragen. Abweichend von der allgemeinen Definition sind in besonderen Ausführungsformen auch Monocarbonsäuren darunter zu verstehen. Unter Carboxyfunktionalitäten werden im Sinne der vorliegenden Erfindung auch deren Derivate, beispielsweise Ester oder Anhydride, verstanden.

Bei den Polycarbonsäuren kann es sich insbesondere um aromatische oder um gesättigte oder ungesättigte aliphatische oder gesättigte oder ungesättigte cycloaliphatische Di- oder Polycarbonsäuren handeln. Bevorzugt werden bifunktionelle Dicarbonsäuren eingesetzt. Beispiele für geeignete aromatische Di- oder Polycarbonsäuren und deren Derivate sind Verbindungen wie Dimethylterephthalat, Terephthalsäure, Isophthalsäure, Naphthalindicarbonsäure und Phthalsäureanhydrid.
Beispiele linearer aliphatischer Di- oder Polycarbonsäuren umfassen Oxalsäure, Dimethyloxalat, Malonsäure, Dimethylmalonat, Bernsteinsäure, Dimethylsuccinat, Glutarsäure, Dimethylglutarat, 3,3-Dimethylglutarsäure, Adipinsäure, Adipinsäuredimethylester, Pimelinsäure, Korksäure, Azelainsäure, Dimethylazelat, Sebacinsäure, Dimethylsebacat, Undecandicarbonsäure, 1,10-Decandicarbonsäure, 1,12-Dodecandicarbonsäure, Brassylsäure, 1,14-Tetradecandicarbonsäure, 1,16-Hexadecandisäure, 1,18-Octadecandisäure, Dimerfettsäuren und Mischungen daraus. Beispiele ungesättigter linearer Di- und/oder Polycarbonsäuren umfassen Itaconsäure, Fumarsäure, Maleinsäure oder Maleinsäureanhydrid.
Beispiele gesättigter cycloaliphatischer Di- und/oder Polycarbonsäuren umfassen Derivate von 1,4-Cyclohexandicarbonsäuren, 1,3-Cyclohexandicarbonsäuren und 1,2-Cyclohexandicarbonsäuren. Die Art der für die Herstellung der Polyester eingesetzten Polyole ist an sich beliebig. Unter Polyolen sind Verbindungen zu verstehen, die mehr als eine und bevorzugt zwei oder mehr Hydroxylgruppen tragen. Abweichend von der allgemeinen Definition sind in besonderen Ausführungsformen auch Monocarbonsäuren darunter zu verstehen. So können lineare oder verzweigte aliphatische und/oder cycloaliphatische und/oder aromatische Polyole enthalten sein. Beispiele für geeignete Diole oder Polyole sind Ethylenglykol, Propandiol-1,2, Propandiol-1,3, Butandiol-1,4, Butandiol-1,3, Butandiol-1,2, Butandiol-2,3, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Tricylclo-[2.2.1]-decandimethanol, Isomere des Limonendimethanols, Isosorbit, Trimethylolpropan, Glycerin, 1,2,6-Hexantriol, Pentaerythrol, Polyethylenglykol, Polypropylenglykol und Mischungen daraus.
Unter aromatischen Diolen oder Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Diole oder Polyole können auch Etherdiole, d. h. Oligomere bzw. Polymere, z. B. auf Basis Ethylenglykol, Propylenglykol oder Butandiol-1,4 enthalten sein.
Bevorzugt werden bifunktionelle Diole und Dicarbonsäuren eingesetzt.

Auch Polyole oder Polycarbonsäuren mit mehr als zwei funktionellen Gruppen, wie beispielsweise Trimellitsäureanhydrid, Trimethylolpropan, Pentaerythrol oder Glycerin können eingesetzt werden. Außerdem können Lactone und Hydroxycarbonsäuren als Bestandteile des Polyesters verwendet werden.

In besonderen Ausführungsformen können auch Monocarbonsäuren und Monoalkohole, wie beispielsweise monofunktionelle Fettsäuren oder Fettalkohole als Bestandteil des Polyesters verwendet werden.

Die Synthese der Polyester erfolgt bevorzugt über eine Schmelzekondensation. Hierzu werden die vorab genannten Di- oder Polycarbonsäuren und Di- oder Polyole im Äquivalentverhältnis von Hydroxyl- zu Carboxylgruppen von 0.5 bis 1.5, bevorzugt 1.0 bis 1.3, vorgelegt und aufgeschmolzen. Die Polykondensation erfolgt in der Schmelze bei Temperaturen zwischen 150 und 280 °C innerhalb von 3 bis 30 Stunden. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitan- oder -zinnverbindungen wie Tetrabutyltitanat oder Dibutylzinnoxid. Denkbar sind auch Katalysatoren, die auf anderen Metallen wie z. B. Zink oder Antimon basieren, sowie metallfreie Veresterungskatalysatoren. Weiterhin sind weitere Additive und Fahrhilfsmittel wie Antioxidantien oder Farbstabilisatoren möglich.

Die in den erfindungsgemäßen Beschichtungszusammensetzungen eingesetzten Polyester (b) weisen vorzugsweise eine Säurezahl, bestimmt nach DIN EN ISO 2114, zwischen 0 und 50 mg KOH/g, vorzugsweise 0 bis 30 mg KOH/g, insbesondere 0 bis 10 mg KOH/g auf. Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N ethanolischer Kalilauge gegen Phenolphthalein titriert.

Die in den erfindungsgemäßen Beschichtungszusammensetzungen eingesetzten Polyester (b) weisen vorzugsweise eine OH-Zahl zwischen 1 bis 120 mg KOH/g, besonders bevorzugt zwischen 5 und 50 mg KOH/g. Im Rahmen der vorliegenden Erfindung erfolgt die Bestimmung der OH-Zahlen nach DIN 53240-2. Bei diesem Verfahren wird die Probe mit Essigsäureanhydrid in Gegenwart von 4 Dimethylaminopyridin als Katalysator umgesetzt, wobei die Hydroxylgruppen acetyliert werden.
Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die Glasübergangstemperatur der Polyester (b) liegt im Bereich von -50 °C bis 120 °C, bevorzugt zwischen 10 °C und 70 °C.

Die zahlengemittelten Molekulargewichte Mn liegen von 1000 bis 25000 g/mol, vorzugsweise bei 2000 bis 10000 g/mol.

Das Molekulargewicht wird im Rahmen der vorliegenden Erfindung bestimmt mittels Gelpermeationschromatographie (GPC). Die Charakterisierung der Proben erfolgte in Tetrahydrofuran als Eluent nach DIN 55672-1.
Mn (UV) = Zahlenmittleres Molgewicht (GPC, UV-Detektion), Angabe in g / mol
Mw (UV) = Massenmittleres Molgewicht (GPC, UV-Detektion), Angabe in g / mol.

Weiterhin weisen die Polyester (b) insbesondere eine lineare oder verzweigte Struktur auf, vorzugsweise sind sie schwach verzweigt.

Die erfindungsgemäß eingesetzten Polyester werden nach bekannten Verfahren (siehe Dr. P. Oldring, Resins for Surface Coatings, Volume III, veröffentlicht von Sita Technology, 203 Gardiness House, Bromhill Road, London SW 184JQ, England 1987) durch (halb)kontinuierliche oder diskontinuierliche Veresterung der Ausgangssäuren und -alkohole in einstufiger oder mehrstufiger Fahrweise hergestellt. Die Synthese der Polyester (b) erfolgt bevorzugt über eine Schmelzekondensation. Hierzu werden die vorab genannten Di- oder Polycarbonsäuren und Di- oder Polyole im Äquivalentverhältnis von Hydroxyl- zu Carboxylgruppen von 0.5 bis 1.5, bevorzugt 1.0 bis 1.3, vorgelegt und aufgeschmolzen. Die Polykondensation erfolgt in der Schmelze bei Temperaturen zwischen 150 und 280°C innerhalb von 3 bis 30h. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitan- oderzinnverbindungen wie Tetrabutyltitanat oder Dibutylzinnoxid. Denkbar sind auch Katalysatoren, die auf anderen Metallen wie z. B. Zink oder Antimon basieren, sowie metallfreie Veresterungskatalysatoren. Weiterhin sind weitere Additive und Fahrhilfsmittel wie Antioxidantien oder Farbstabilisatoren möglich.

Der Anteil der erfindungsgemäß eingesetzten Block-Copolymere aus OH-, COOH- oder Aminofunktionalisierten Polymeren (Block B) und Polyestern (Block A) an der Formulierung beträgt, bezogen auf die gesamte Formulierung, 0,1 - 99 Gewichtsprozent, bevorzugt 0,1-50 Gewichtsprozent und besonders bevorzugt 0,1 - 25 Gewichtsprozent.

Bevorzugt eingesetzte Polyester (b) sind beispielsweise die kommerziell erhältlichen Polyester der Produktgruppe DYNAPOL® (Fa. Evonik Resource Efficiency GmbH). Derartige Polyester weisen vielfach eine leicht verzweigte Struktur auf, mit unterschiedlichen Molekulargewichten und Glasübergangstemperaturen in den vorab genannten Bereichen und zeigen in der Regel eine optimale Verträglichkeit mit anderen Formulierungsbestandteilen auf.

Weiterhin enthalten die Beschichtungszusammensetzungen dem Fachmann aus dem Stand der Technik bekannten, für die gewünschte Vernetzung benötigten Vernetzungskomponenten.

Neben den bereits beschriebenen Beschichtungszusammensetzungen sind auch Verfahren zur Beschichtung von Substraten Gegenstand der vorliegenden Erfindung.
In dem erfindungsgemäßen Verfahren zur Beschichtung eines Substrats wird das Substrat mit einer zuvor beschriebenen erfindungsgemäßen Beschichtungszusammensetzung beschichtet und die Beschichtung anschließend getrocknet und/oder kalziniert. Dabei vernetzen die Formulierungsbestandteile zu der erfindungsgemäßen Beschichtung.

In Bezug auf das Verfahren zur Beschichtung von Substraten mit den erfindungsgemäßen Beschichtungszusammensetzungen gibt es mehrere Ausführungsformen. In der einfachsten Ausführungsform erfolgt die Beschichtung direkt auf das Substrat. Hierzu wird insbesondere ein Verfahren verwendet, in dem die erfindungsgemäße Formulierung in organischer Lösung gemeinsam mit weiteren Formulierungsbestandteilen als "Organosol" auf das Substrat aufgetragen und die aufgetragene Schicht anschließend getrocknet wird. Dabei erfolgt die Beschichtung beispielsweise mittels Knife Coating, Roll Coating, Dip Coating, Curtain Coating, Spray Coating. Während des Trocknens erfolgt parallel die Vernetzung der Beschichtung.

In einer besonders bevorzugten, jedoch nicht ausschließlichen, Variante der genannten Beschichtungsvariante der vorliegenden Erfindung werden die erfindungsgemäßen Formulierungen im Rahmen von Bandbeschichtungsprozessen, auch Coil-Coating genannt, eingesetzt. Coil Coating ist ein Verfahren zur ein- oder beidseitigen Beschichtung von flachen beispielsweise Stahl- oder AluminiumBändern. Das resultierende Material ist ein Verbundwerkstoff aus einem metallischen Trägermaterial, optional vorbehandelt und/oder mit einem Korrosionsschutzprimer versehen, und einer organischen Beschichtung. Verfahren und Ausführungsformen von Coil-Coating-Prozessen sind dem Fachmann bekannt.

In einer zweiten Ausführungsform wird die Beschichtung in Form einer, mit der erfindungsgemäßen Beschichtungszusammensetzung ausgerüsteten Oberflächenvergütungsfolie auf das jeweilige Substratmaterial realisiert. Hierbei erfolgt zunächst die haftfeste Beschichtung der erfindungsgemäßen Beschichtungszusammensetzung auf ein entsprechendes Folien-Substratmaterial. Die Applikation dieser Oberflächenvergütungsfolie auf das jeweilige Endsubstratmaterial erfolgt anschließend. Dabei ist die Unterseite der Oberflächenvergütungsfolie entweder mit einer selbstklebenden Kleberformulierung beschichtet, mit einem Hotmelt oder mit einer Adhäsivschicht ausgerüstet. Diese Modifikation der Unterseite bindet bei einer temperatur- und druckunterstützten Applikation auf dem Endsubstratmaterial an.

Über die Materialeigenschaften der Oberflächenvergütungsfolie können auf diese Weise weitere Produktmerkmale, z. B. auch optischer Natur, realisiert werden. Außerdem ist ein solches Verfahren sehr flexibel, z. B. bei größeren zu beschichtenden Substraten, vor Ort ohne Handhabung von Lösungsmitteln oder hohen Temperaturen anwendbar.

In einer dritten, der zweiten Ausführungsform ähnlichen Variante, wird die Beschichtung in Form eines Thermotransfer-Prozesses der erfindungsgemäßen Beschichtungszusammensetzung auf das jeweilige Substratmaterial realisiert.
Hierbei wird ein entsprechendes Folien- oder Papier-Trägermaterial in einem ersten Beschichtungsschritt mit einer Releaseschicht ausgerüstet, welche einen Thermo-Transfer der, in einem zweiten Beschichtungsschritt applizierten, erfinderischen Coatingformulierung auf das jeweilige Substratmaterial ermöglicht.
Optional kann hierbei, falls notwendig, in einem dritten Beschichtungsschritt eine Adhäsivschicht appliziert werden, welche eine sachgerechte Haftung des Thermotransfer-Schichtenaufbaus auf dem jeweiligen Substratmaterial gewährleistet.

Eine vierte Ausführungsform repräsentiert die Lösungsmittel-freie Pulverlackbeschichtung. Geeignete Verfahren und Ausführungsformen diesbezüglich sind dem Fachmann hinlänglich bekannt.

In einer weiteren Ausführungsform der vorliegenden Erfindung werden die erfindungsgemäßen Formulierungen zur Herstellung von Coil-Laminaten eingesetzt. Entsprechende Systeme und Ausführungsformen sind dem Fachmann grundsätzlich bekannt.

Die erfindungsgemäße Beschichtung kann anschließend optional mit einer oder mehreren weiteren funktionellen Schichten versehen werden. Dabei kann es sich beispielsweise um eine Kratzfestbeschichtung, eine leitfähige Schicht, eine Antisoiling-Beschichtung und/oder um eine reflektionserhöhende Schicht oder anderen optisch funktionelle Schichten handeln. Diese zusätzlichen Schichten können beispielsweise mittels Physical Vapour Deposition (PVD) oder Chemical Vapour Deposition (CVD) aufgebracht werden.

Eine zusätzliche Kratzfestbeschichtung kann optional zur weiteren Verbesserung der Kratzfestigkeit aufgetragen werden. Bei Kratzfestbeschichtungen kann es sich z. B. um Siliziumoxid-Schichten handeln, die direkt mittels PVD oder CVD aufgetragen werden.

Überraschenderweise eignen sich die erfindungsgemäßen Beschichtungszusammensetzungen für den Einsatz bei öligen Oberflächen.

In einer bevorzugten Ausführungsform handelt es sich bei den erfindungsgemäß beschichteten Substraten um ölige Substrate. Unter öligen Substraten sind solche Untergründe zu verstehen, die auf der Oberfläche natürliche, synthetische oder mineralische Öle enthalten. Dabei können die öligen Substanzen durch Verarbeitungsschritte auf die Substrate gelangen (z. B. Ziehfette, Trennmittel etc.). Insbesondere im Coil-Coating-Bereich sind die metallischen Oberflächen vielfach mit öligen Substanzen verunreinigt.

Geeignete metallische Substrate sind insbesondere ausgewählt aus Stahl oder Aluminium.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

### Synthesebeispiel zur Herstellung der Block-Copolymere:

### Polymer P1

750 g POLYVEST HT (hydroxy-terminiertes Polybutadien) wird mit 375 g epsilon-Caprolaton und 375 g Lactid in einem 1.5 l Kolben mit Destillationsaufsatz unter Stickstoff vermengt und auf 160 °C erhitzt. Anschließend werden 1,5 g DBTL (Dibutyl-zinn-laurat) als Katalysator zugegeben und die Mischung bei konstanter Temperatur für 8 Stunden gerührt. Es wird ein zähflüssiges Polymer erhalten.

Das Verfahren ist modifizierbar bzgl. des Katalysators, des Verhältnisses von POYLVEST HT zu Lacton und eingesetztem Lacton.

Herstellung der Beschichtungsmittel:
Die Herstellung der Beschichtungsmittel erfolgt durch intensives Mischen der Komponenten bei Temperaturen von 20°C bis 80°C ("Lehrbuch der Lacktechnologie", Th. Brock, M. Groteklaes, P. Mischke, Hrsg. V. Zorll, Vincentz Verlag, Hannover, 1998, S 229ff.). Nicht flüssige Komponenten werden zuerst in geeigneten Lösemitteln in Lösung gebracht, anschließend werden die restlichen Komponenten unter Rühren zugefügt.

Für die Herstellung der Beschichtungsmittel wurden die Polyole gemäß Tabelle 1 zunächst in einer 93:7-Mischung Solvent Naphta 150:Xylol gelöst, sodass 65 Gew-%ige Lösungen erhalten wurden.

**Tabelle 1: Die Polyole wurden im angegebenen Verhältnis gelöst in Solvent Naphta 150:Xylol 97:3 gelöst, sodass 65 Gew-%ige Polyollösungen erhalten wurden.**

| Verhältnis der Polyolkomponenten (Gew-%) | | | |
|---|---|---|---|
| Polyol | Vergleich 1 | Vergleich 2 | Beispiel 1 |
| DYNAPOL LH 898 | 100 | 95 | 95 |
| POLYVEST HT | 0 | 5 | 0 |
| Polymer P1 | 0 | 0 | 5 |

**Tabelle 2:**

| Formulierung der Beschichtungsmittel | |
|---|---|
| Polyol-Lösung (gemäß Tabelle 1) | 64,0 g |
| Cymel303LF (Fa. Allnex) | 10,4 g |
| Disparlon L1984(50% in SN200ND) (Fa.Kusomoto) | 1,5 g |
| DYNAPOL Catalyst 1203 (Fa. Evonik) | 2,9 g |
| Resiflow FL2(10% in Solvent naphta150ND) (Fa. Worlee) | 2,6 g |
| Byk-057 (Fa. BYK) | 0,6 g |
| DBE | 5,7 g |
| Xylol | 5,3 g |
| n-Butanol | 7,0 g |
| Gesamt: | 100,0g |

Die Beschichtungsmittel wurden mit einem 32 µm-Rakel auf die Metallsubstrate (BLECHQUALITÄT) aufgetragen und für 30 Sekunden bei 295 °C eingebrannt. Die Oberfläche der Metallsubstrate wurde zuvor mit einem Beispielöl (Motoröl 10W-40) in einer Menge von 0,2 g/m² kontaminiert.

| Test | Beschichtungsmittel | | |
|---|---|---|---|
| | Vergleich 1 | Vergleich 2 | Beispiel 1 |
| Substratbenetzung (visuell beurteilt, vor und nach dem Einbrennen) | Schlecht. Bildung von Tropfen | Gut, vollständig homogen | Gut, vollständig homogen |
| MEK-Test¹ | 80 DH | 10 DH | 100 DH |

| | | | |
|---|---|---|---|
| ¹ ECCA Test Methode T11: (Diese Prüfmethode ermöglicht es, die Vernetzung eines reaktiven Lacksystems unter den zugrundeliegenden Einbrennbedingungen zu überprüfen. | | | |

Durchführung: Das beschichtete "Blech", bestehend aus Aluminium oder verzinktem Stahl o. ä. wird mit einem in Methylethylketon (MEK) getränkten Wattebausch (mit 1 oder 2 Kg Gewicht (MEK-Hammer)) chemisch/mechanisch belastet. Es handelt sich um geradlinige Doppelhübe, bei denen es zu einem chemischen Angriff der Beschichtung kommen kann. In der Regel soll eine vollständig durchgehärtete Beschichtung 100 Doppelhübe (DH) unbeschadet überstehen. Bei nicht ausreichender Durchhärtung kommt es nach den ersten Doppelhüben, ggf. erst später (< 100DH) zu einer Auflösung des Lackes. Es werden die entsprechend erreichten Doppelhübe ganzzahlig angegeben und sind ein Maß z. B. für die Durchhärtung oder die Vernetzungsdichte oder die Reaktivität eines Lacksystems.)

## Patentansprüche

1. Verwendung von Block-Copolymeren aus OH-, COOH oder Amino-funktionalisierten Polymeren und Polyestern als Bindemittel in Beschichtungszusammensetzungen.

2. Verwendung gemäß Anspruch 1, **dadurch gekennzeichnet, dass** es sich bei den erfindungsgemäß eingesetzten Block-Copolymeren auf Basis von OH-, COOH- oder Amino-funktionalisierten Polymeren und Polyestern um B(A)ₓ-Blocksysteme, mit A = Polyester, mit B = OH-, COOH- oder Amino-funktionalisiertes Polymer und mit x ≥ 1 handelt.

3. Verwendung gemäß Anspruch 1 oder 2, **dadurch gekennzeichnet, dass** die OH-, COOH- oder Amino-funktionalisierten Polymere ausgewählt sind aus OH-funktionalisierten Polyethern, OHfunktionalisierten Polycarbonaten, OH-funktionalisierten Polyethercarbonaten, NH₂- oder NHR-oder NR₂-funktionalisierten Polyamiden, NH₂- oder NHR- oder NR₂-funktionalisierten Polyaminen, OH-Gruppen tragenden Poly(meth)-acrylaten, OH-funktionalisierten Polystyrol, OH-funktionalisiertem Polybutadien, OH-funktionalisierten Polyolefinen oder COOH-terminierten Polyestern.

4. Verwendung gemäß einem oder mehreren der Ansprüche 1 bis 3, **dadurch gekennzeichnet, dass** die Block-Copolymere auf Polyestern aus Lactonen und/oder Lactiden basieren.

5. Beschichtungszusammensetzungen mindestens enthaltend (a) Block-Copolymere aus OH-, COOH- oder Amino-funktionalisierten Polymeren (Block B) und Polyestern (Block A), und (b) mindestens einer weiteren OH-, COOH- oder Amino-funktionalisierten Komponente.

6. Beschichtungszusammensetzungen gemäß Anspruch 5, **dadurch gekennzeichnet, dass** es sich um Lacke für Coil-Coating-Beschichtungen auf Metallen handelt.

7. Beschichtungszusammensetzungen gemäß Anspruch 5 oder 6, **dadurch gekennzeichnet, dass** sie als Komponente (b) Polyester auf Basis von Di-oder Polyolen und Di- oder Polycarbonsäuren bzw. deren Derivaten enthalten.

8. Verwendung von Beschichtungszusammensetzungen gemäß einem oder mehreren der Ansprüche 5 bis 7 zur Beschichtung von Substraten.

9. Verwendung gemäß Anspruch 8, **dadurch gekennzeichnet dass** es sich bei den Substraten um ölige Substrate handelt.
